# EUROPEAN PATENT SPECIFICATION

(11) **EP 2 494 420 B1**
(45) Date of publication and mention of the grant of the patent: **10.06.2020**
(21) Application number: 10825860.9
(22) Date of filing: 28.10.2010
(51) Int. Cl.: G05D 27/02, G05D 25/00, G05B 19/414, G05D 23/00, G05B 11/32, G06F 3/01, G05B 15/02

(54) **ENVIRONMENTAL CONTROL METHOD AND SYSTEM**
VERFAHREN UND SYSTEM ZUM STEUERN VON UMWELTBEDINGUNGEN
PROCÉDÉ DE COMMANDE DE L'ENVIRONNEMENT ET SYSTÈME ASSOCIÉ

(30) Priority: 30.10.2009 AU 2009905327
(43) Date of publication of application: 05.09.2012
(73) Proprietor: Cale, Richard John, Ingleside, NSW 2101 (AU); Kyriakou, Mary-Anne, Bondi, NSW 2026 (AU)
(72) Inventor: TULLY, Fraser, Rohan, Kaleen NSW 2617 (AU)
(74) Representative: Staeger & Sperling Partnerschaftsgesellschaft mbB
(86) International application number: PCT/AU2010/001442
(87) International publication number: WO 2011/050414

(56) References cited:
- WO-A1-95/22087
- DE-U1- 20 003 119
- US-A1- 2007 156 256
- US-A1- 2009 227 876
- US-A1- 2009 264 788
- US-B2- 6 967 565
- Anonymous: "Innovation: Mind-reading headsets will change your brain | New Scientist", , 23 April 2009 (2009-04-23), XP055229297, Retrieved from the Internet: URL:https://www.newscientist.com/article/d n17009-innovation-mind-reading-headsets-wi ll-change-your-brain/ [retrieved on 2015-11-18]

## Description

### TECHNICAL FIELD

The present invention relates to a method and system used to control the environment of a user or occupant of a structure. Preferably, the invention may be employed to allow a user to interface with a control system of an intelligent building or automated structure by way of neural electrical activity signals.

### BACKGROUND TO THE INVENTION

Building automation systems have been developed which employ computer controlled networks of environmental control peripherals. These peripheral devices can be provided through lighting, air conditioning or climate control components as well as mechanical elements or components. Such a control system and associated peripheral devices form what can be known as an intelligent building. Intelligent buildings are networked with one or more bus systems to allow data to be forwarded to controller components from sensors or environmental control devices, and for commands issued by controllers to be actuated by environmental control components.

Intelligent buildings use building automation systems to reduce their energy consumption and overall maintenance costs. Alerts may be issued to maintenance personnel by a building's controller if a peripheral device is behaving abnormally or has returned a measurement outside of a threshold of accepted values. This early warning system can quickly diagnose faults and also identify peripheral devices which are in need of maintenance, repair or replacement.

Intelligent buildings can also use sensors to determine which of their interior regions are occupied. This information can be used to control the activation or deactivation of lighting systems. Intelligent buildings can also employ schedules to control the operation of climate control systems so that the structure is only heated or cooled in regions which will be occupied over predictable periods of time.

The behaviour of the building automation system is generally determined by a set of rules and schedules combined with ranges of acceptable operational parameters. For example, a building may vary between the operational states of unoccupied, morning warm up, occupied and night time set back based on predicted user occupancy schedules and operational parameters defined for each of these modes of operation.

In general, the environment in an intelligent building is directly controlled by the behaviour of the building automation system. Very limited user or occupant control can be provided by push buttons or dial based manual override switches. These switches can override the existing state or behaviour of the automation system such as for example, if an occupant is present when the building automation system believes the structure is in an unoccupied state.

An issue identified with respect to intelligent buildings is the degree of control afforded to the occupants of the building with respect to their environment. Normally the behaviour of a building automation system may only be modified through a computer terminal connected to the building's controllers. Furthermore, access permissions are usually restricted to a small number of persons authorised to modify the behaviour of the system.

This is potentially an issue for occupants who must live with the "one size fits all" policy decisions of the building automation system. Changes in the behaviour of the automation system are difficult and slow to effect, and cannot easily be made with respect to the requirements of one particular user or a small localised area within an intelligent building. Manual override switches present in existing smart buildings can provide coarse control of environmental parameters by indicating either occupancy of the region or a desired ambient temperature. These override switches generally operate for a large area such as a floor, not the actual region occupied by a single person if they are using the building outside of its normal occupancy schedule.

Existing building automation systems simply focus on the control of lighting and air conditioning systems, and do not necessarily interface with or allow fully control of additional components or equipment incorporated within a smart building.

Furthermore, the behaviours of building automation systems are not necessarily driven by the current state or condition of the building's occupants. These building automation systems are unaware of any physical distress experienced by their occupants or of the emotional state of building occupants and hence are unable to tailor the environment they provide in light of same.

Existing structures usually integrate some form of security or access control system to restrict entry to the structure or subregions of the structure only to authorised persons. These access control systems are generally provided as standalone features of the building, and usually require an authorised person to memorise a personal identification number or to carry some form of authorisation token, swipe card or key to gain access to the structure. This approach can cause difficulties for persons who forget their access codes or lose the authorisation token provided to them - effectively locking them out of the structure which they have valid access rights to.

In this specification, unless the context clearly indicates otherwise, the term "comprising" has the non-exclusive meaning of the word, in the sense of "including at least" rather than the exclusive meaning in the sense of "consisting only of". The same applies with corresponding grammatical changes to other forms of the word such as "comprise", "comprises" and so on.

Prior art in this technical field is disclosed in US 2009/264788 A1, US 2009/227876 A1 and US 2007/156256 A1.

### SUMMARY OF THE INVENTION

According to one aspect of the invention there is provided an environment management system for a structure according to claim 1.

According to a further aspect of the present invention, there is provided a method of managing the environment of at least one region of a structure as defined in claim 12.

Further aspects of the invention are outlined in the dependent claims. In the following, when the term "embodiment" relates to unclaimed combination of features, said term has to be understood as referring to examples of the present invention.

According to yet another aspect of the present disclosure there is provided an interface for a user input system and a controller, said controller being arranged to receive signals from one or more peripheral devices distributed within a structure, the user input system being arranged to use at least one user neural command to provide a user command to said controller, the interface including a translation element arranged to receive at least one user command from the user input system and to formulate a command executable by said controller using at least one protocol recognised by said controller.

The present invention is adapted to provide, implement or facilitate an environment management system of a structure. The present invention also encompasses a method of operating such an environment management system to control the environment of at least one region within the structure. The present disclosure also encompasses an interface arranged to facilitate the formulation of commands executable or actionable by at least one controller using user neural signals.

Reference in general throughout the specification will be made to the present invention implementing an environment management system, but those skilled in the art should appreciate that these additional aspects are within the scope of the invention.

An environment management system provided in accordance with the present invention can be used to control the environment experienced by the occupants of a particular structure or potentially a range of individual structures.

The present invention may be used in relation to any form of structure or enclosure, such as for example, office blocks, domestic houses, apartment blocks, factory environments, or research and development laboratories. In other instances the interior spaces defined within a vehicle of any description may constitute an environment to be managed in conjunction with the present invention.

In yet other embodiments an environment may be presented or displayed to the user in the form of a virtual environment, whereby the user commands employed in relation to the present invention can be shown to change this virtual environment. In such instances the virtual environment may in practice represent or signify an actual physical environment where the user's interaction with the virtual environment in turn causes changes to the real world environment. Those skilled in the art should appreciate that a wide range of structures may benefit from the provision of an environment management system by the present invention.

Reference in general throughout the specification will however be made to the structure with which the present invention is used being an office block composed of a number of different floors subdivided again into a number of different rooms, offices or common areas. Again, those skilled in the art should appreciate that reference to office spaces throughout the specification should in no way be seen as limiting.

The present invention is arranged to work with a plurality of peripheral devices distributed within the structure or building which is to have its environment managed. These peripheral devices may be formed by any number of different types of components, any of which being arranged to control the environment experienced by an occupant of the building or structure.

For example, a peripheral device may be formed by a lighting component in some instances, an air conditioning control component or an entire air conditioning system in other instances. A peripheral device may also be formed by a component of a security system such as for example a passive infrared detector arranged to detect the presence of a person within a particular region. Peripheral devices in the form of locks or related access control systems may be employed in conjunction with the present invention to allow user commands to be used to provide access to a particular area or region of the structure, or access to the structure itself. Such security based peripheral devices could alternatively provide access to secured spaces or resources such as safety deposit boxes, safes or access to computing or file storage resources.

In embodiments where the present invention is used in access control applications, user commands may be employed in addition to a second authorisation or identity factor provided or received from the user. The second factor authorisation may for example be provided through a camera recording an image of a user's face for facial recognition purposes, or through any other appropriate biometric data capture system. Alternatively, a second factor authorisation may be provided by an identity code or profile associated with the user input system which uniquely identifies its user.

In yet another embodiment a peripheral device may be formed by an appliance or system arranged to emit an audio signal such as a security alarm system, or a stereo system of an entertainment centre. For example in one instance a peripheral device may be formed by a video conferencing assembly which is arranged to act on user commands to connect video conference calls or sessions as desired by a user. The connection of a video conference will thereby change the local environment of a region through the provision of the audio and visual signals of the video conference call.

In other embodiments a peripheral device may be arranged to present a visual display such as through a plasma, light emitting diode, or liquid crystal display screen. Alternatively a peripheral device may be provided by a fragrance or scent generation element configured to emit scents into a specific region of a building.

In yet further embodiments a peripheral device may be formed from any required or appropriate mechanical system capable of being commanded or controlled by user commands. For example, a building's elevator or plumbing systems may for example be commanded or operated as peripheral devices in some embodiments in accordance with the present invention.

Those skilled in the art should appreciate that the above examples of peripherals devices should in no way be seen as limiting to the scope of the present invention, where these peripheral devices may modify an environment by changing any characteristics of the environment capable of detection by a user.

Reference in general will also be made to the characteristics of the environment adjusted in conjunction of the present invention being lighting levels and air temperature values. Again, those skilled in the art should appreciate that these references should in no way be considered limiting to the invention.

Such peripheral devices are distributed throughout the structure and have an association with a particular subregion or area of a structure. Within these regions the operation of the peripheral device will have an effect on the environment of the region. For example, a lighting peripheral device will illuminate a particular region. Alternatively with an air conditioning component, the operation of the component will modify the air temperature locally within a particular region.

An environment management system provided by the present invention also incorporates at least one network. Such a network is used to connect the peripheral devices distributed throughout the structure to at least one controller.

Those skilled in the art should appreciate that a wide range of different forms of network technology may be employed to provide this element of the invention. Dedicated or customised copper wiring systems, ethernet cabling or potentially wireless networks may all be employed to provide such a network if required. The present invention may employ any network technology which allows for the transmission of signals from peripheral devices to a controller and for the transmission of commands from a controller to peripheral devices.

Preferably the present invention may incorporate at least one controller arranged to manage the operation of the peripheral devices within the structure. One or more controllers may be provided for a single structure depending on the number, form and distribution of peripheral devices and also the layout of the structure in question. For example, in one embodiment a series of sub controllers may be provided to manage the operation of individual subsets of like peripheral devices such as air conditioning components or lighting components. These subsets of peripheral devices may be managed by their own controller which can, in turn, be directly provided with a user command or which may receive commands from a master controller.

A controller used with the present invention can therefore issue commands to peripheral devices which modify the behaviour of the peripheral device. These controllers may also receive a signal from a peripheral device giving information as to an actual or current characteristic of the environment of the region associated with the peripheral device. For example, in the case of air conditioning peripherals, signals may be sent to a controller indicating current air temperature within the region serviced by the component, and a controller may issue commands to the peripheral to increase or decrease this temperature as required.

In a preferred embodiment, the peripheral devices, network or networks, and controller or controllers employed by the present invention may be implemented so as to conform to the KNX™ smart building management protocol. The KNX™ protocol provides an effective mechanism where the operation of a building's peripheral devices can be managed efficiently, and also allows a wide range of peripheral devices sourced from many different manufactures to be interfaced together and work effectively within a single structure.

Reference throughout the specification will also be made to the present invention employing KNX™ compliant peripherals, networks and controllers in the implementation of an environment management system. However, those skilled in the art should appreciate that different forms of building management protocols or architectures may also be employed in conjunctions with the present invention. For example, in other embodiments these components may be provided which comply with the BACnet, LonWorks, or the European Home Systems Protocol.

The present invention incorporates or is associated with a user input system. This user input system is arranged to sense, receive or otherwise detect at least one user neural signal. Neural signals can be sensed by electrodes placed adjacent to the scalp of a user to detect electrical signals associated with the firing of brain neurons. A neural signal as discussed throughout the specification may be understood to be any form of electrical signal generated by the brain and can, for example, encompass electroencephalograph (EEG) signals.

These neural signals can be considered to represent the current thought processes of a user, and in particular represent the commands or desires of a user with respect to their local environment. Such neural signals can be generated by a user performing a specific thought process or physical action so that neural command impulses transmitted through to the user's nervous system can make up the neural signal or signals employed by the user input system. Specific thought processes or physical actions can engender consciously controlled commands to actively select, activate or identify a particular user command. In such embodiments these consciously controlled cognitive actions can identify user commands arranged specifically to modify a particular environmental parameter - such as for example changing light levels or the instigation of a video conference call to a particular recipient.

In such embodiments the present invention may also incorporate a virtual reality navigation system. The identification of particular user commands to be issued to a controller can be achieved through a user navigating through this virtual environment by issuing a number of consciously controlled cognitive selections or actions. For example, in such embodiments a user may positively select up, down, left or right arrow icons displayed to them in a virtual environment to navigate through a hierarchy of commands available for the user to issue. These active or explicit cognitive actions may be instigated by a user completing particular physical actions such as hand motions, focusing their eyes on a particular area or alternatively may be completed directly through cognitive thought processes.

Conversely, the neural signals used by the user input system can indicate a current emotional state of the user, being a passive form of input not directly attributable to a specific desire or specific command consciously issued by the user. Such passive cognitive commands can give an indication of the current emotional state of the user

Those skilled in the art should appreciate that a range of user commands may be employed in conjunction with the present invention depending on the characteristics of the environment which is to be controlled. As discussed above, active cognitive actions may be used to identify a specific environmental parameter be changed, or passive information can be used to derive a set of environmental parameters to be changed.

An active cognitive command may be issued by a user in the form of an early warning system for emergency situations. For example if a user identifies that a nearby building or the structure they occupy is on fire, or that any other emergency situation has occurred, they may issue a specific early warning user emergency command which can alert others in the structure to the existence of the emergency condition. Such early warning commands can potentially activate or operate a range of peripheral devices such as security alarms, locking mechanisms or fire fighting sprinkler systems

In a preferred embodiment, a user input system may be formed by an Emotive™ neural signal detection headset. The Emotive™ headset provides a convenient form of user input system which does not require the scalp of the user be shaved or otherwise prepared prior to the headset being employed. The Emotive™ headset and its associated signal processing systems can allow an intelligent determination to be made as to the identity of a specific command consciously issued by a user, or the emotional state or condition of the user.

Reference in general will also be made throughout the specification to a user input system employed in conjunction of the present invention being provided by an Emotive™ neural signal sensing headset. However, those skilled in the art should appreciate that any effective neural signal sensing system may be employed as a user input system in accordance with the present invention.

For example, in one alternative embodiment a user may have a number of neural signal sensing electrodes implanted subcutaneously under their scalp to implement a permanent form of neural signal detection headset. In yet other embodiments such neural signal detection systems may be formed from or by devices provided by NeuroSky, Ooz, IMEC, emsense, Electrocap for example.

In further preferred embodiments, the present invention may also receive information, data or signals from biometric data sensing components in combination with the neural signals employed by the user input system. As discussed above, such additional biometric information may be used in access control applications to confirm the identity of a user. In other embodiments this feature may provide additional information to assist in an assessment or identification of the current mood or emotional state of a user. Such biometric information may for example be provided by skin conductivity sensors, heart beat or respiration measurement sensors, fingerprint, iris scanning or facial recognitions or any other appropriate form of biometric data capture system.

The user input system employed is arranged to provide a user command to one or more controllers. Appropriate signal processing mechanisms may take or receive a user neural signal and interpret same to identify a specific command to be issued to a controller.

This user input system can employ a number of different forms of signal processing techniques to identify specific commands from detected neural signals. Signal band pass filtering systems, artefact detection and subtraction algorithms and/or neural network pattern detection technology may potentially all be employed in conjunction with the user input system. Those skilled in the art should appreciate that these aspects of the operation of the user input system are known in the art and hence are not discussed in detail within this specification.

As indicated above, user commands employed by the environment management system may be either active or passive in nature. Active user commands can specifically direct that particular characteristics of the user's environment should be changed, such as for example, light levels being increased or ambient air temperatures being decreased.

In other alternative embodiments, a user command may be passive in nature and may provide an indication of the user's current mood or emotional state. This form of command does not necessarily directly dictate a specific change in particular environmental conditions, but may instead be used as source information to retrieve a plan, script or "recipe" of specific environmental conditions which would be enjoyed by or be of assistance to the user. For example, if the neural signals sensed formulate a user command indicative of the user being agitated and angry, this information may be used to retrieve an associated script which issues commands to the structures' peripheral devices to reduce the temperature of a room, lower the room's light levels and activate a fragrance dispenser which heats calming aroma therapy oils. Conversely, if a user's emotional state is determined to be lethargic during a time at which the user is not likely to be resting, commands may be issued to increase the light levels in the area occupied by the user, activate a stereo system playing loud or fast music, or for air circulation fans to be activated.

The present invention also encompasses the provision of an interface between the user input system and a controller.

In a further preferred embodiment, this interface may be implemented through one or more software processes which perform a translation function with respect to the application programming interface (API) of the user input system and the API of the controller or controllers which commands are to be issued to. This interface can receive active or passive user commands in a format or protocol generated by the components of the user input system and subsequently formulate these commands into a protocol acceptable to or executable by a controller. Such a software interface may in some instances run on the same hardware or components as a controller, or in other embodiments may be run on a dedicated computer system disposed between the user input system and any controllers to which commands are to be issued.

Preferably, the interface provided by the present invention may also implement or facilitate a hierarchal command menu system to be navigated by a user to issue a particular command. For example, in a further preferred embodiment a hierarchal based menu system may be provided which gives a user a choice of a maximum of four options to select a command from at any one point in time. Each of these maximum of four options can be associated with or represented by a particular direction - being forward, back, left, or right (for example), to allow a user to intuitively select a particular command. Those skilled in the art should appreciate that other types of menu, user interface, or interaction systems may however be implemented in conjunction with the present invention if required.

In some embodiments, menu or command structures which the user is to interact with may also require a user to issue a second confirmation action or command once an initial or primary command has been issued. The requirement for a second confirmation to be given ensures that a false triggering of a command can be reversed easily. In such instances a false triggering of a command may be reversed through a time-out facility where the menu system can revert back to its original state prior to the command being issued if no second confirmation action is given. Alternatively, a cancellation action may also be offered to a user at the same time as the option of providing a confirmation command.

In a preferred embodiment the present invention may also include or provide at least one command reception indicator deployed within the structure which is to have its environment managed. In a further preferred embodiment, a plurality of command reception indicators may be deployed throughout a structure where an indicator is provided in each sub-region of the structure which a user is likely to both occupy and issue user commands within.

A command reception indicator may take a number of forms depending on the application or arrangement of the present invention.

For example, in some embodiments this type of indicator may be formed by a bell, chime, or other type of electrical based audio signal generator. The generation of a specific audio tone can confirm for a user that their command has been received and is currently being executed by the invention.

In other embodiments, a command reception indicator may be formed by a light visual component such as a light emitting diode or emitting another appropriate form of compact, low power light source. Such diodes may be lit continuously for a period of time to confirm receipt of a valid user command. Alternatively, a diode or an array of diodes may be provided as a single command reception indicator, where these diodes flash or are otherwise activated to provide specific command reception status information to a user.

In a preferred embodiment, the present invention may include at least one user position detection device or system. A user position detection device can be employed to provide the invention with information as to the specific location within a structure which a user occupies, thereby allowing the invention to tailor the commands or options open to a user. For example, in some instances a hierarchal menu of command options namely available to a user can be restricted to remove invalid commands which cannot be issued in relation to the user's current location.

In some embodiments, a user position detection device or system may also provide information as to the orientation of the user. For example, such functionality can indicate that a user is facing a particular wall or view present within a sub-region of the structure. This facility may again allow the invention to further modify the commands offered or available for use by a user depending on their present viewpoint of an area of the structure.

### BRIEF DESCRIPTION OF THE DRAWINGS

Preferred embodiments of the invention will now be described, by way of example only, with reference to the accompanying drawings in which:
Figure 1 shows a block schematic diagram of an environmental control system implemented in accordance with a preferred embodiment of the present invention; and
Figure 2 shows a block schematic diagram of an environmental control system implemented in accordance with an alternative embodiment of the present invention; and
Figure 3 shows a flow chart of an algorithm executed to adjust the characteristics of the environment of region executed in accordance with a further embodiment of the invention; and
Figure 4 shows a UML system architecture diagram for an environmental management system provided in accordance with a further embodiment of the present invention; and
Figure 5 shows a UML class diagram illustrating a software design for the master controller specified with respect to Figure 4, and
Figure 6 shows a schematic example menu system implementation provided in accordance with the embodiment discussed with respect to Figures 4 and 5.

### DETAILED DESCRIPTION OF PREFERRED EMBODIMENTS

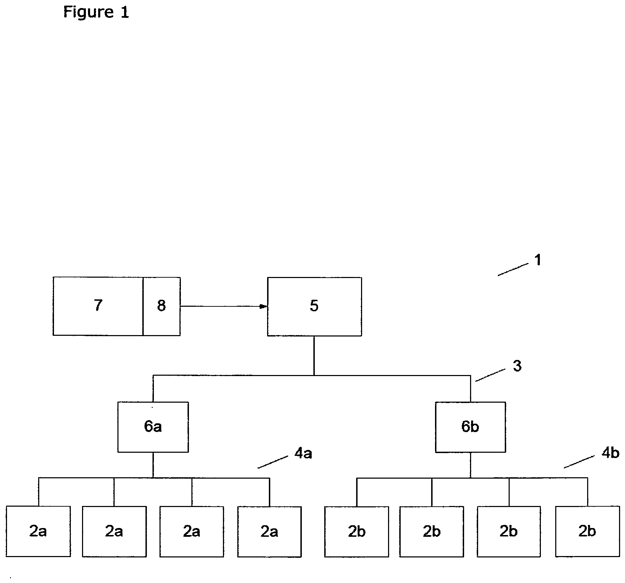

Figure 1 shows a block schematic diagram of an environmental control system implemented in accordance with a preferred embodiment of the present invention.

In the embodiment shown with respect to Figure 1, an environment management system (1) for an office block is shown. The environment management system (1) incorporates a number of peripheral devices (2a, 2b) where the operation of each of these peripheral devices modifies the environment of at least one region within the structure.

In the embodiment shown the peripheral devices (2a) are formed by independent lighting components distributed throughout the various floors and rooms of the office structure. The second set of peripheral devices (2b) are formed by a range of air conditioning or climate control components. These components (2b) can modify the temperature and climate within individual or localised regions of the office structure.

The environment management system (1) also incorporates a primary network (3) and two sub networks (4a, 4b) to connect the various components and elements of the environment management system. All of the lighting peripherals (2a) are connected via sub network (4a) whereas all of the air conditioning peripherals (2b) are connected via sub network (4b). In the embodiment shown the primary network (3) and sub networks (4a, 4b) are provided through ethernet wiring.

The environment management system also incorporates three separate controllers, being a master controller (5), and two sub controllers (6a, 6b). These controllers are connected together via the primary network (3), with the sub controllers (6a, 6b) connected to each group of peripheral devices (2a, 2b) by a sub network (4a, 4b). Sub controller (6a) is used to manage the distribution of commands to each of the peripheral devices (2a) and also to receive signals from these devices. These signals can indicate either the condition of the environment in which each device (2a) is deployed or information pertaining to the operation or state of the peripheral.

Sub controller (2b) also performs the same functions, issuing commands to each of the peripherals (2b) and receiving signals or information transmitted from peripherals.

The master controller (5) is used to manage the operation of each of the sub controllers (6a, 6b). This master controller can manage the operation of all peripheral devices within a building through the issue of commands and receipt of signals or information from a range of sub controllers. In the embodiments shown a sub controller is provided for each class or type of peripheral device incorporated into a structure.

Each of these controllers can be formed by any appropriate arrangement of digital processing equipment. For example, in the embodiment shown, each of the sub controllers (6a, 6b) is formed by an embedded microprocessor, whereas the master controller (5) is provided by a large capacity computer system also capable of acting as a file server, web server or to provide a graphical user interface to any persons in the physical vicinity of the master controller (5).

The present invention also includes a user input system (7) which integrates an interface (8) connected to the master controller (5). In the embodiments shown the user interface system (7) is formed by an Emotive™ neural signal capture headset which is arranged to sense a set of user neural or EEG signals and to provide user commands to the master controller via the interface (8). In the embodiment shown with respect to Figure 1, the interface (8) is formed by a software translation element or process associated with or run on a computer system also connected to the Emotive™ neural signal headset (7). This translation process can receive the output of the Emotive™ headset (7) and reformulate or translate any user commands received into a protocol or set of instructions intelligible to and actionable by the master controller (5). Those skilled in the art should appreciate that appropriate application programming interfaces may be used by this translation element (8) to ensure that the user neural signals captured by the headset (7) result in effective and executable commands being delivered to the master controller (5).

The environment management system (1) shown is arranged so as to detect user neural signals via the headset (7) which are in turn translated into executable user commands to be forwarded to the master controller (5).

The master controller (5) can then address an appropriate set of commands to each of the sub controllers (6) connected to the primary network (3) which relate to the form or content of any user command received. A user command may for example indicate that the air temperature in a particular office or room should be lowered or the lights in a meeting room should be brightened, or any appropriate combination or permutation of environment modification tasks.

The master controller (5) in turn addresses individual commands to each of the sub controllers (6) involved with a peripheral device which is to have its operation modified in terms of the user command received. Each sub controller then takes responsibility for issuing operational commands via a sub network (4) to an identified peripheral device (2).

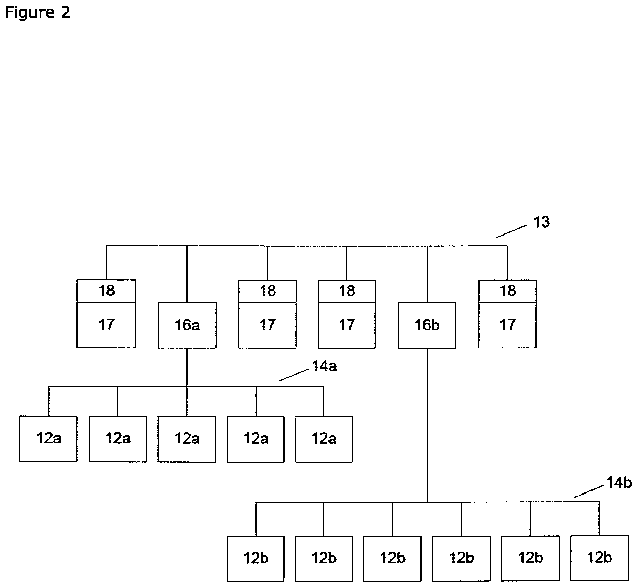

Figure 2 shows a block schematic diagram of an environmental control system implemented in accordance with an alternative embodiment of the present invention.

Figure 2 again shows an environment management system (11) but with a different network architecture and arrangement to that discussed with respect to Figure 1. In the embodiment shown with respect to Figure 2, a plurality of user input systems (17) and interfaces (18) are provided and connected to a primary network (13). Each of the user input systems (17) and interfaces (18) can address commands directly to either of two controllers (16a, 16b) connected to the primary network.

Each controller (16) is connected via a sub network (14a, 14b) to a set or group of peripheral devices (12a, 12b). As with the embodiment discussed with respect to Figure 1, the sub network (14) groups together like types or forms of peripheral device (12).

The environment management system (11) shown with respect to Figure 2 functions in a similar way to that discussed with respect to Figure 1. However, each of the user input systems and interfaces (17, 18) can issue commands to any of the peripheral devices (12) via a controller (16).

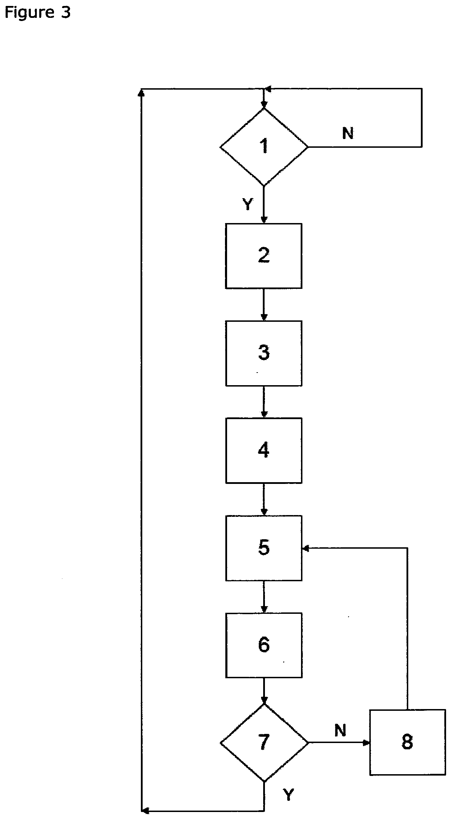

Figure 3 shows a flow chart of an algorithm executed to adjust the characteristics of the environment of region of a structure executed in accordance with a further embodiment of the invention.

In the first stage of this process (1) a determination is made as to whether a user input system and preferably an Emotive™ neural signal capture headset is active and is present within a specific location of a structure.

If a positive determination is made that an input system headset is active and within a structure stage (2) of this process is executed. The process awaits receipt of one or potentially more user commands supplied by the headset, which in the embodiment discussed with respect to Figure (3), are passive types of user commands. These passive commands are formulated through a determination as to the emotional state or condition of a user, and also whether the user is exhibiting abnormal physiological indicators such as heightened body temperature or a fast heart beat.

Those skilled in the art should appreciate that in other embodiments user commands may be formed from or by specific active cognitive actions or selections made by a user. These specific cognitive actions may be generated by particular thought processes of the user or by the user performing specific physical gestures or movements to identify a particular user command.

At stage (4) of this process, the passive user command information and the location information determined at stage (1), is employed as addressing or look up keys to a look up table. This table can store a range of configuration or action scripts detailing actions which can be completed by peripheral environmental control devices. A script of commands can modify the local environment of the user wearing the headset to suit or potentially improve the emotional state determined. Each of these configuration scripts identify particular peripheral devices and target environmental parameters which the operation of the identified peripherals should aim to achieve.

At stage (5) of this process, an identified configuration script is retrieved and the commands it contains transmitted through to any associated controllers linked to the identified peripheral device or devices. These controllers ensure that the commands issued are subsequently actioned by each peripheral device.

At stage (6) of this process, command acknowledgements are received from any peripheral devices to which commands were addressed, in addition to signals indicating current environmental data related to the local environment identified for the user.

At stage (7) of this process, a determination is made as to whether the current local environment of the user matches the environmental characteristics or parameters defined within their retrieved configuration script identified with respect to step (4). If these parameters do not match, stage (8) of this process is completed.

At stage (8), the commands of the reconfiguration script are reformulated to modify the range or band of environmental parameter values indicated by or associated with the commands issued. For example, in one instance, an initial command may be provided to drop the temperature within a room to 20°C. A subsequent report can indicate that the temperature of the room is static at 22°C. A reformulated command issued with respect to stage (8) can therefore lower the target temperature for the room to 18°C.

Alternatively if at stage (7) of this process the local environment of a user is determined to be appropriate, the process may loop back to stage 1 discussed above.

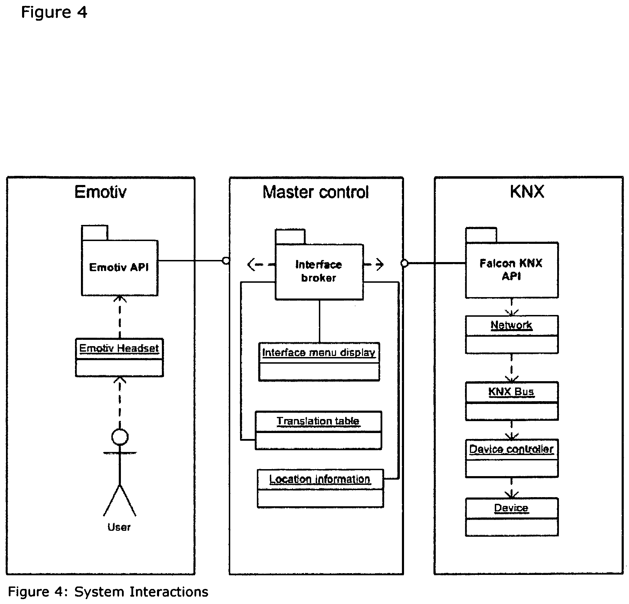

Figures 4, 5, and 6 provide an illustration of an environment management system implemented in accordance with a further embodiment to the present invention. The following describes implementation details of an EEG based environment controller utilizing an Emotiv EEG headset and KNX technology.

The system requires the following third party software tools or equivalent products:
1. The Falcon KNX API;
2. The Emotiv API utilizing either the Emokey key stroke generator or a direct link into Emotiv SDK.

The Emotiv headset, API, Falcon API and KNX system are commercially available products and systems and are therefore not described in detail below.

The core software developed in this embodiment includes the master controller, menu system, command lookup table and links to the Emotiv / KNX API.

The system is illustrated in the interaction diagram shown in Figure 4. The master control module links the emotive and KNX toolsets, and provides feedback to the user.

The system comprises the following components:

| **Component** | **Description** |
|---|---|
| Emotiv Headset | A physical device which makes EEG measurements and transmits these to a computer running the Emotiv Application Programming Interface (API) |
| Emotiv API | Software to read EEG measurements and translate these measurements into detected EEG triggers |
| Interface broker | Software to receive EEG triggers, and translate these triggers either in changes to menu state and/or instructions on the Falcon KNX API |
| Menu Interface | A computer monitor, audio device or similar signalling designed to provide feedback to the user of the current menu state and device options |
| Translation table | A configurable mapping from interface menu item to KNX protocol command |
| Falcon KNX API | Software that translates instructions from the Interface broker into messages using the KNX protocol. |
| Network | A computer network (typically TCP/IP) allowing transmission of messages to the KNX bus |
| KNX Bus | A system for routing KNX messages to the intended device controller |
| Device controller | A device that contains a KNX address and the capacity to drive / signal a device such as a light, motor or other peripheral action |
| Device | The object that is ultimately under control of the user |

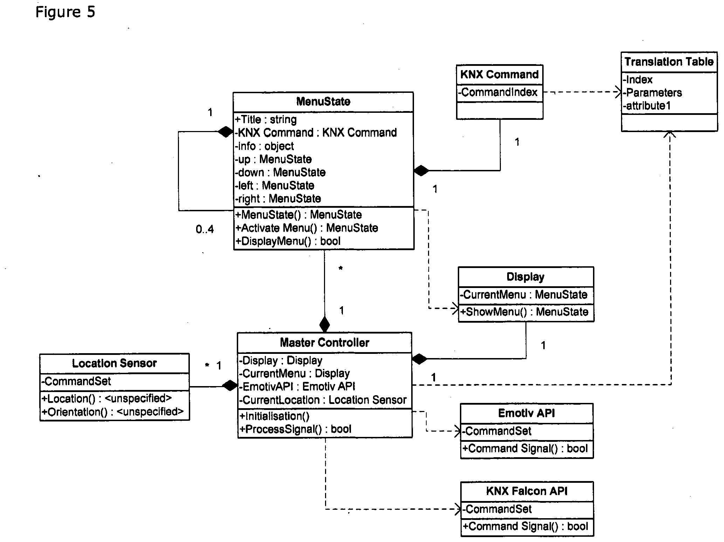

Figure 5 illustrates a software design for one implementation of the master controller and sub-components. The master controller links input APIs (Emotiv, Location sensors) to Menu states, and via the menu states, to the KNX devices.

The master control interface broker is the central component of the system. It receives messages from the Emotiv API, and translates these into command messages suitable for broadcast over the KNX network.

The master controller comprises the following major functions:
1. Intialisation: Initialise all subsystems
2. Main Loop: A main loop for controlling messaging and menu states
3. Activate Menu: Operations to perform when a command has been issued

These are described below:

### 1. Initialisation

The initialisation module can be illustrated as the following pseudo code

```
 Check Emotiv headset status (EmotivAPI):
       If Fault detected, signal to user, then halt.
       If ok, proceed.
 Open connection to Falcon KNX library (KNXFalconAPI):
  Check Falcon KNX status:
       If fault detected, signal to user, then halt.
       If ok, proceed.
  Initialise Display using present location
  Set menu state to start menu.
 Enter Main loop.
```

### 2. Main Loop

The main loop runs continuously after initialization:

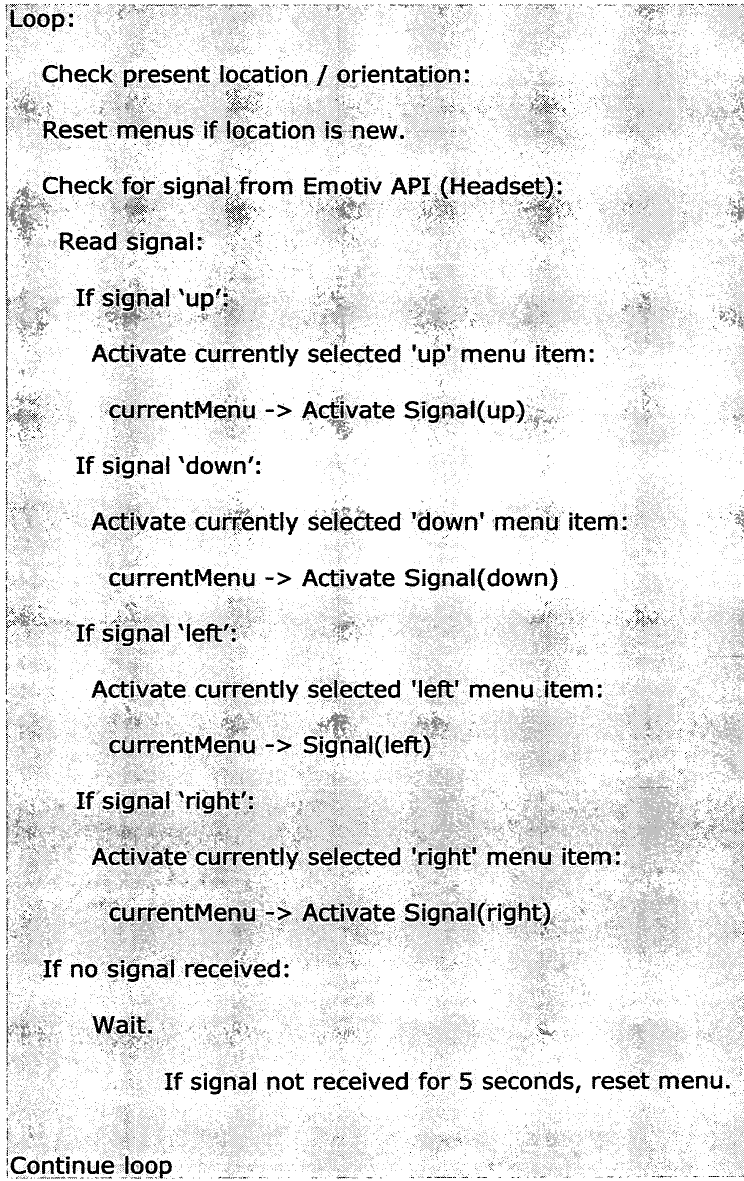

### 3. Activate Menu

Menu activation will either

```
    Check menu item type:
   If menu item type is submenu:
     Move the current menu to the submenu
        Update Display
   If menu item type is KNX command:
     Look up the KNX command index from internal KNX table
        Update Display
     Send KNX command to device using Falcon library
```

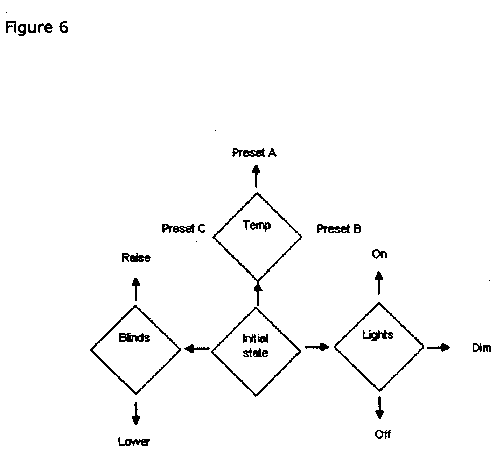

An implementation of a menu system with four menu states is shown with respect to Figure 6.

A translation table or translation element is used to map from these menu commands to the corresponding element or KNX action. Each menu end state is linked to a specific KNX address. There may be a single translation table for the system as a whole, or a separate translation table for each location in the building.

A menu state as shown in Figure 6 can be represented as follows:

| **Title** | **State or Command** | **User action** | **KNX address** | **Purpose** |
|---|---|---|---|---|
| Initial state | State | Up | - | Navigate to temperature menu |
| | State | Left | - | Navigate to blinds menu |
| | State | Right | - | Navigate to lights menu |
| Temperature | Command | Up | 0/0/1 | Change temperature to preset A |
| | Command | Left | 0/0/1 | Change temperature to preset B |
| | Command | Right | 0/0/1 | Change temperature to preset C |
| Blinds | Command | Up | 0/0/2 | Raise blinds |
| | Command | Down | 0/0/2 | Lower blinds |
| Lights | Command | Up | 0/0/3 | Switch lights fully on |
| | Command | Down | 0/0/3 | Switch lights off |
| | Command | Right | 0/0/3 | Switch lights to 50% brightness |

As can be appreciated by those skilled in the art, the above system allows for the association of particular commands with directions for a user to navigate through and use the menu system provided.

Set out below by way of example is a source code prototype for a master controller provided in accordance with a yet further embodiment of the present invention. This prototype incorporates menu navigation and the activation of KNX peripheral devices in a similar way to that discussed above with respect to the embodiment of Figures 4 through 6 - with the exception of providing a simplified one screen menu system with no sub menus, hard coding of a translation table and dispensing with the use of location based information.

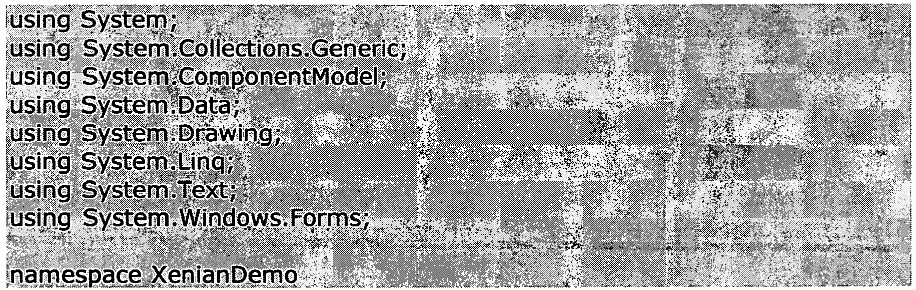

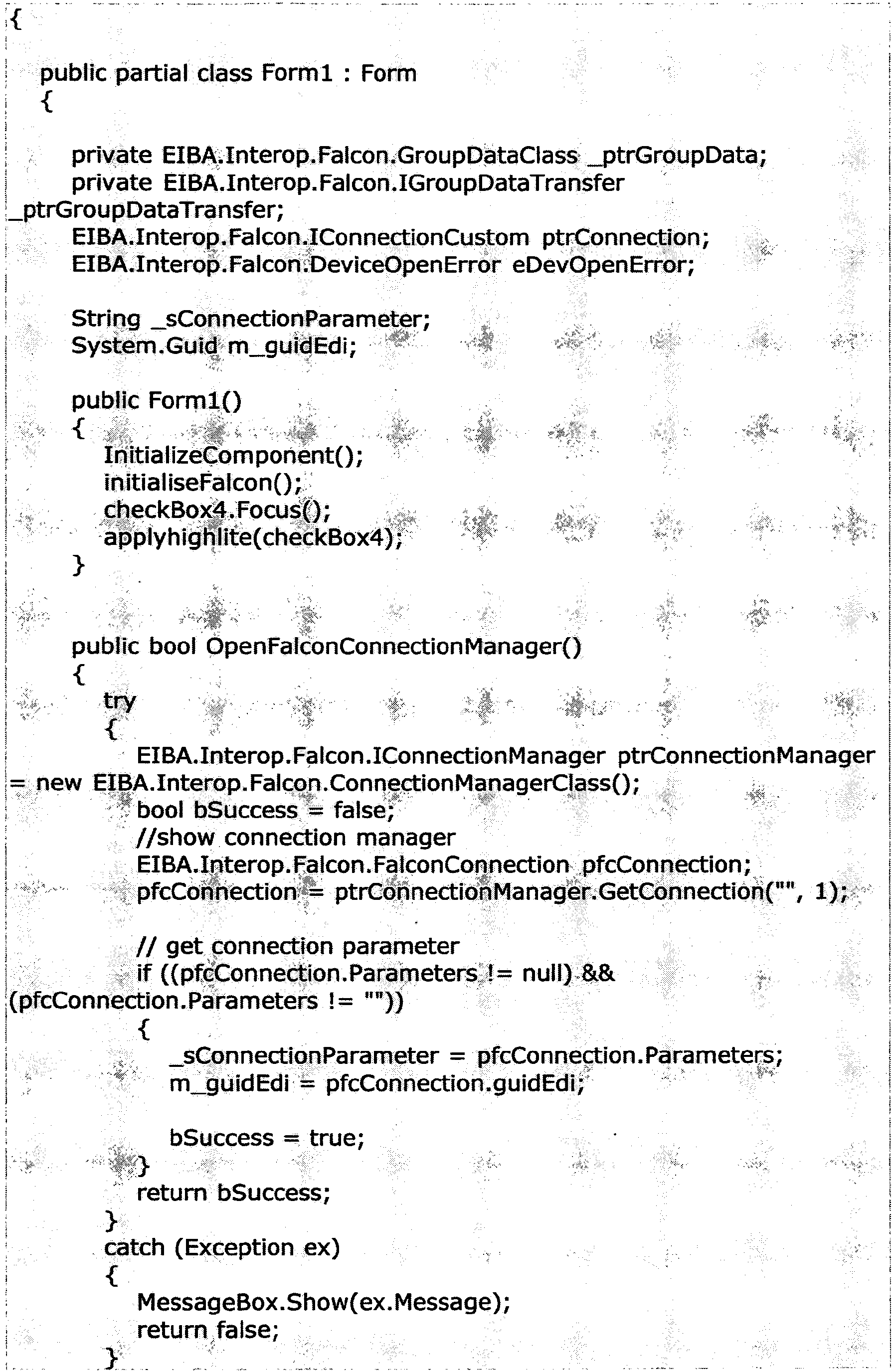

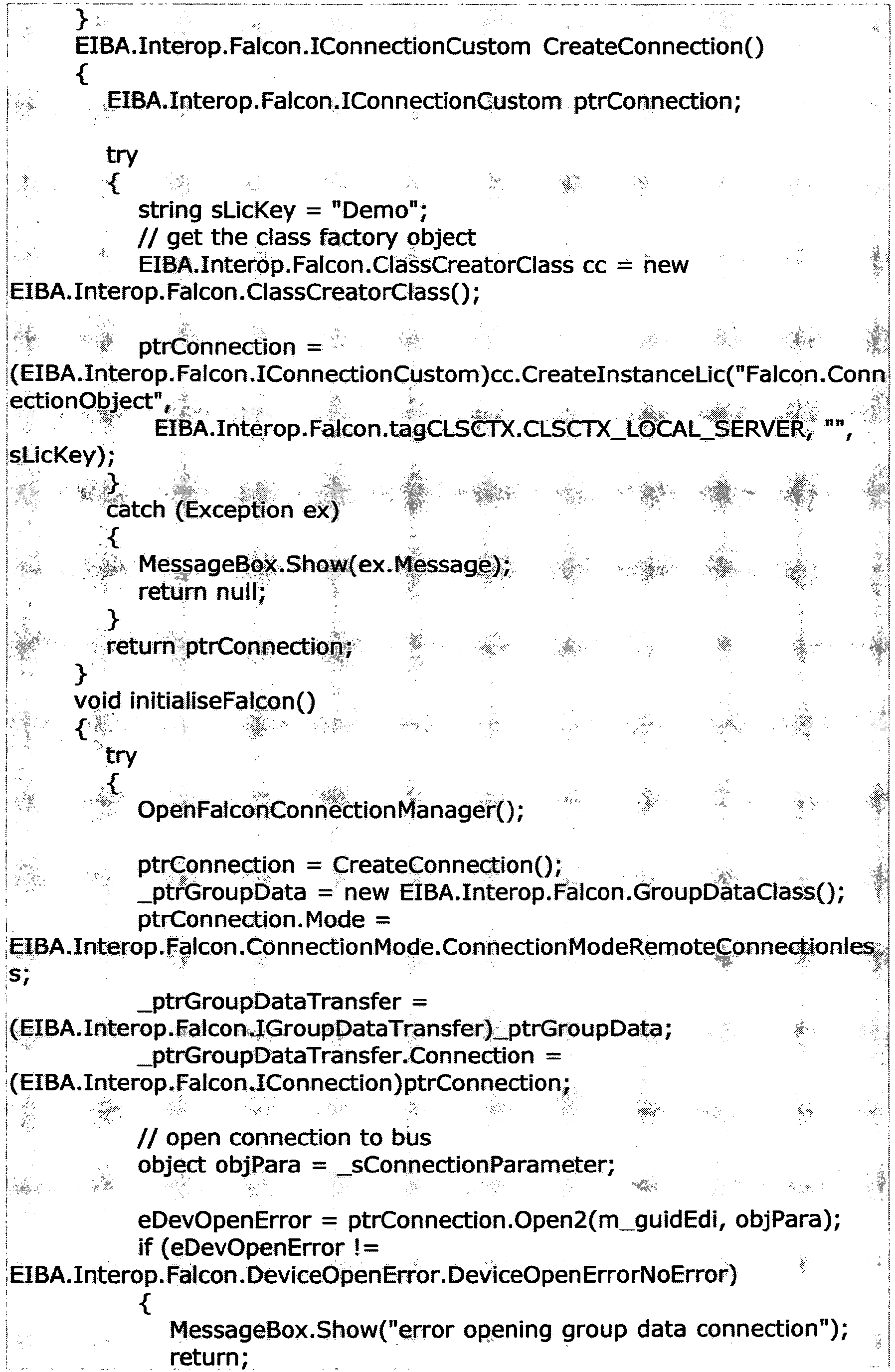

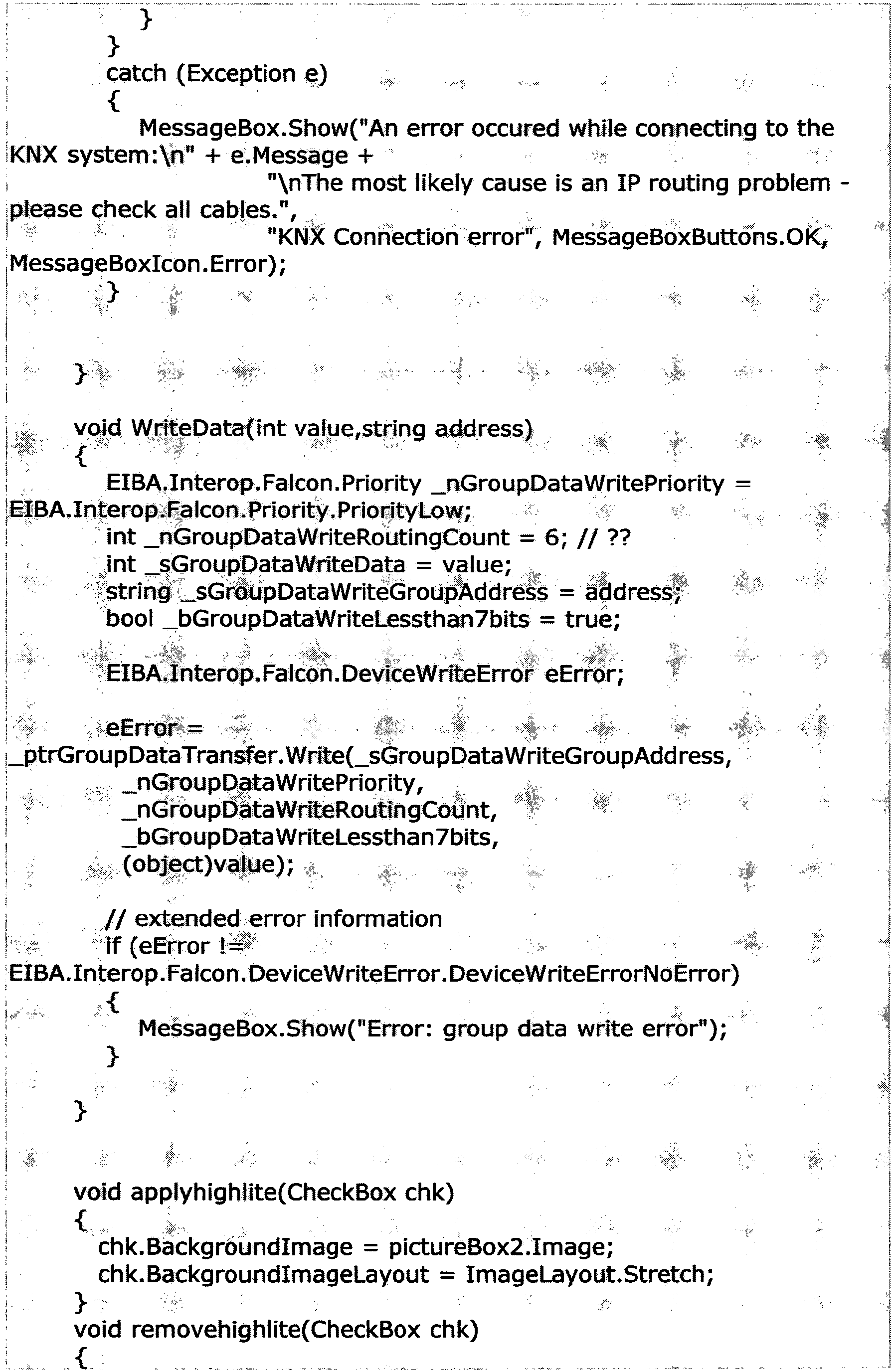

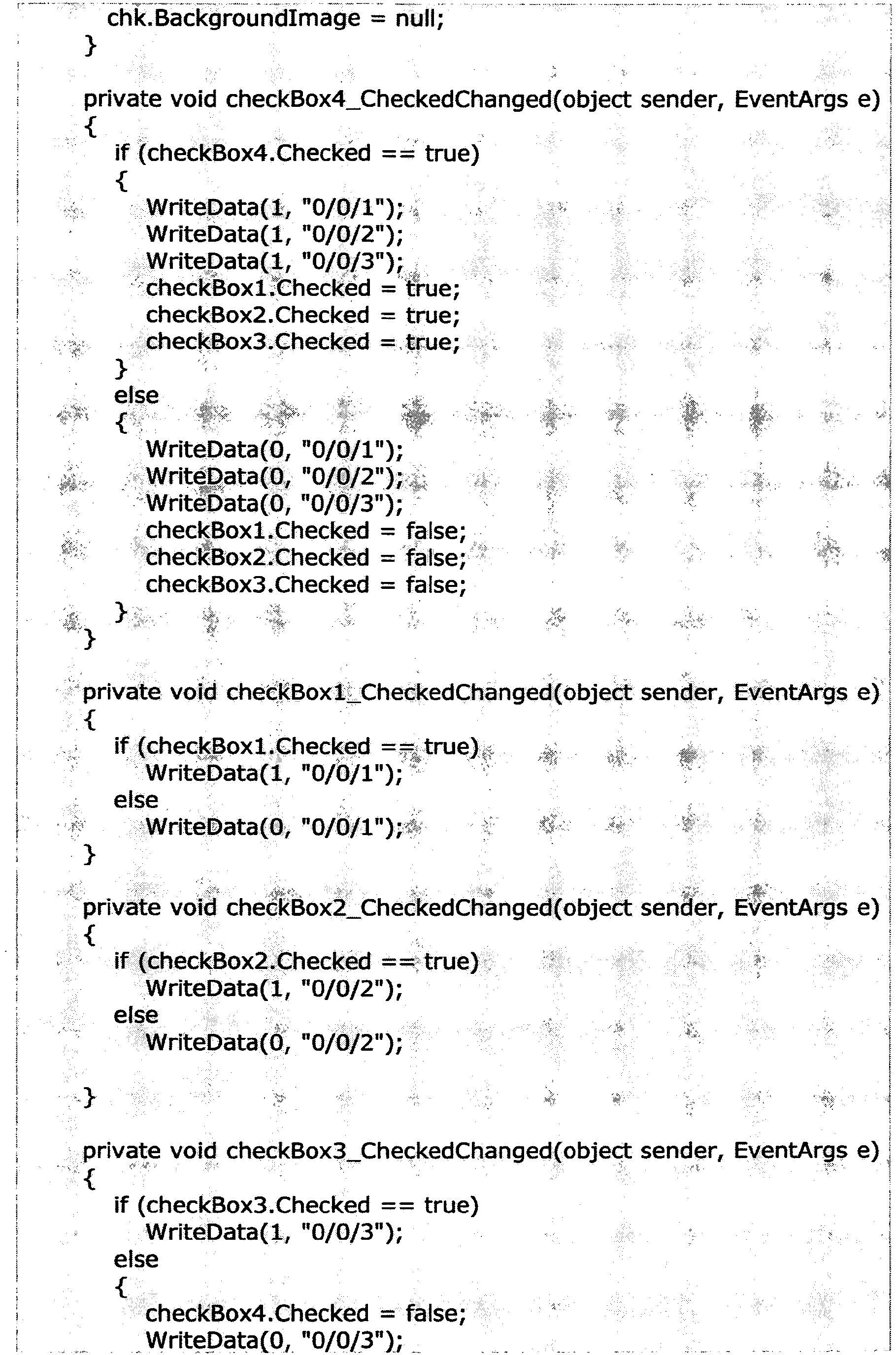

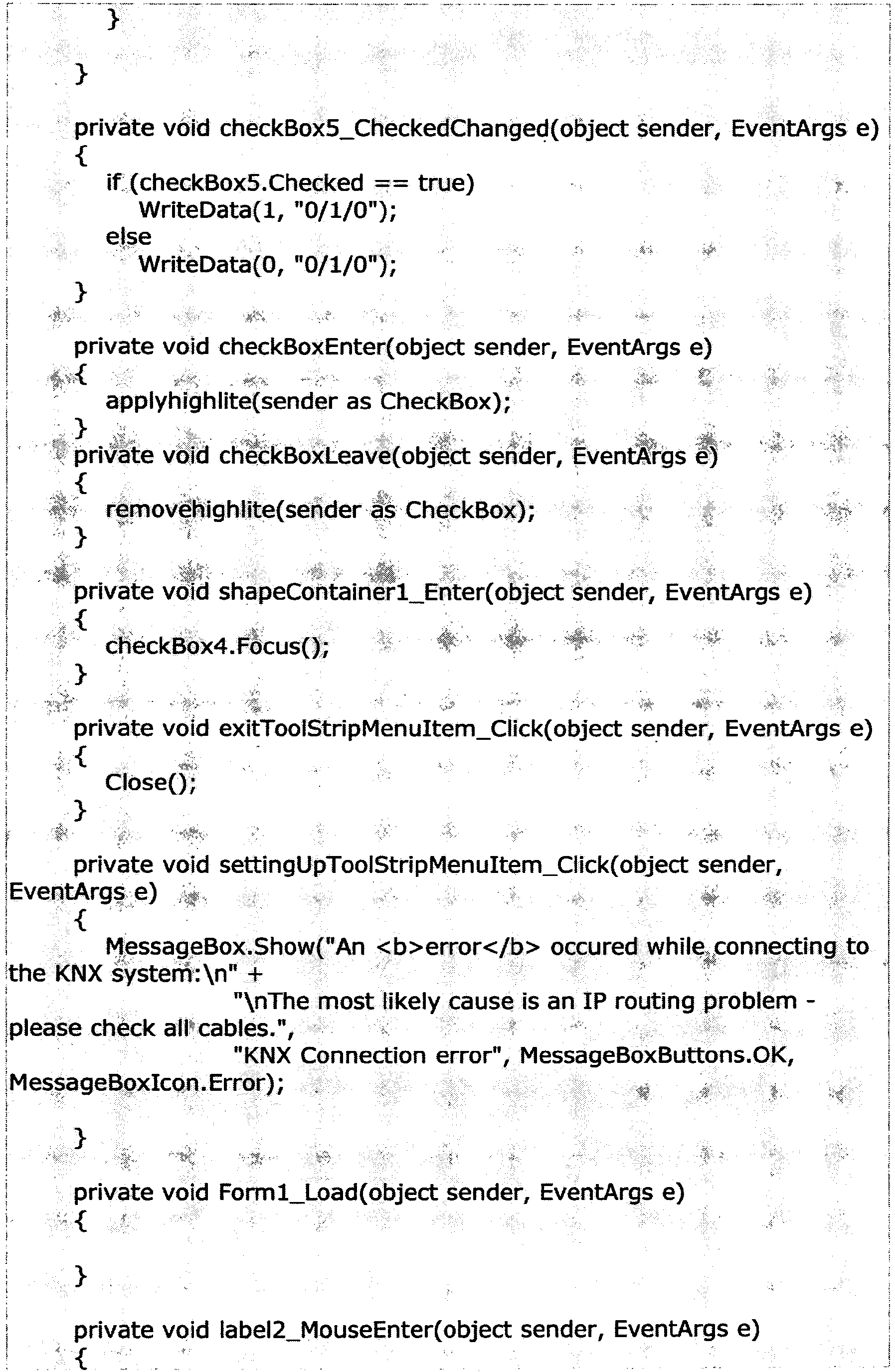

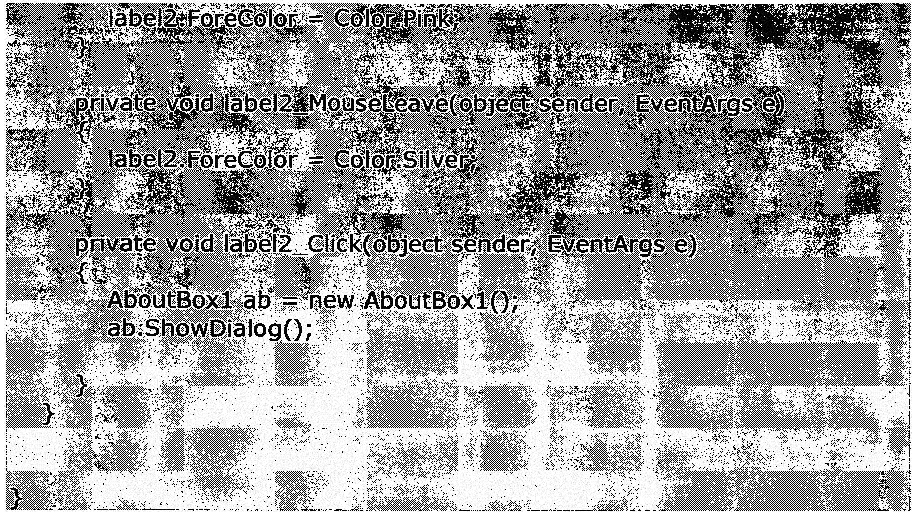

## Claims

1. Environment management system for a structure which includes:
a plurality of peripheral devices distributed within the structure wherein operation of a peripheral device modifies the environment of at least one region of the structure associated with the peripheral device;
at least one network which connects said plurality of peripheral devices;
at least one controller arranged to receive signals from one or more peripheral device and to a transmit a command to one or more peripheral device using said at least one network;
**characterised in that** the system further includes:
a user input system interfaced with said at least one controller, the user input system being arranged to use at least one user neural signal to provide a user command to one or more said controllers,
wherein an interface operating between the user input system and the at least one controller implements a hierarchal command menu system providing a user a choice of a maximum of four options to select a menu item associated with a direction from at any one time, the selection made by said neural signal representing an active cognitive command,
wherein the active cognitive command is associated with a direction and activates a selected menu item associated with the direction,
wherein the interface is configured such that activation of the selected menu item moves a current menu to a submenu or causes the at least one controller to transmit a command to the peripheral device to modify the environment of said at least one region of the structure associated with the peripheral device,
wherein the system further includes at least one user position detection device which provides information regarding the location of the user input device within a structure or the orientation of the user input device relative to the structure, and
wherein the interface is configured to remove invalid commands which cannot be issued in relation to the current location or orientation of the user input device based on the information provided by the at least one user position detection device.

2. Environment management system as claimed in claim 1 wherein the structure forms a building enclosure which defines an interior space and the peripheral device is a lighting component, an air conditioning component, is formed by a security based device or is formed from a domestic appliance.

3. Environment management system as claimed in any previous claim which includes at least one wire or physical network.

4. Environment management system as claimed in any previous claim which includes at least one wireless network.

5. Environment management system as claimed in any previous claim which incorporates one or more of KNX compliant peripherals, KNX compliant networks or KNX compliant controllers.

6. Environment management system as claimed in any previous claim wherein another user command provides a passive cognitive command which gives an indication of the current emotional state of the user.

7. Environment management system as claimed in claim 6 wherein a passive user command is used to retrieve a script of specific environmental conditions.

8. Environment management system as claimed in any previous claim wherein a user input system incorporates one or more of a neural signal detection headset or biometric data sensing component.

9. Environment management system of any one of claims 1 to 8, wherein a user is required to issue a second confirmation user command after the issue of an initial user command.

10. Environment management system of any one of claims 1 to 9, further comprising at least one command reception indicator, formed from an audio signal generator or a light emitting visual component, deployed within the structure.

11. Environment management system as claimed in claim 10 wherein a command reception indicator is provided in each sub-region of a structure which a user can occupy and issue commands within.

12. Method of managing the environment of at least one region of a structure comprising the steps of:
(i) providing a user command from a user interface system to a controller, said user command being formulated using at least one user neural signal;
(ii) transmitting at least one command from the controller to at least one peripheral device located within the structure to control the operation of said at least one peripheral device;
(iii) operating said at least one peripheral device supplied with a command to manage the environment of the region associated with each of said peripheral devices based on the original user command provided by the user input system,
**characterised in that**:
the user command is provided via a hierarchal command menu system providing a user a choice of a maximum of four options to select a menu item associated with a direction from at any one time, the selection made by said neural signal representing an active cognitive command,
wherein the active cognitive command is associated with a direction and activates the selected menu item associated with the direction,
wherein the interface is configured such that activation of the selected menu item moves a current menu to a submenu or causes the at least one controller to transmit said at least one command to said at least one peripheral device to modify the environment of said at least one region of the structure associated with said at least one peripheral device,
wherein method further includes the steps of, prior to providing a user command from a user interface system to a controller:
providing information regarding the location of a user input device within a structure or the orientation of the user input device relative to the structure from at least one user position detection device, and
removing invalid commands which cannot be issued in relation to the current location or orientation of the user input device based on the information provided by the at least one user position detection device.

## Patentansprüche

1. Umweltverwaltungssystem für eine Struktur, das Folgendes beinhaltet:
eine Vielzahl von Peripheriegeräten, die innerhalb der Struktur verteilt ist, wobei der Betrieb eines Peripheriegeräts die Umwelt von zumindest einer Region der Struktur in Zusammenhang mit dem Peripheriegerät modifiziert;
zumindest ein Netzwerk, das die Vielzahl von Peripheriegeräten verbindet;
zumindest eine Steuerung, die angeordnet ist, um Signale von einem oder mehreren Peripheriegeräten zu empfangen und um einen Befehl an ein oder mehrere Peripheriegeräte unter Verwendung des zumindest einen Netzwerks zu Übertragen;
**dadurch gekennzeichnet, dass** das System ferner Folgendes beinhaltet:
ein Benutzereingabesystem, das mit der zumindest einen Steuerung verbunden ist, wobei das Benutzereingabesystem angeordnet ist, um zumindest ein neurales Benutzersignal zu verwenden, um einer oder mehreren der Steuerungen einen Benutzerbefehl bereitzustellen,
wobei eine Schnittstelle, die zwischen dem Benutzereingabesystem und der zumindest einen Steuerung arbeitet, ein hierarchisches Befehlsmenüsystem implementiert, das einem Benutzer eine Auswahl aus einem Maximum von vier Optionen bereitstellt, um einen Menüpunkt in Zusammenhang mit einer Richtung zu einer beliebigen Zeit auszuwählen, wobei die Auswahl durch das neurale Signal erfolgt, das einen aktiven kognitiven Befehl darstellt,
wobei der aktive kognitive Befehl mit einer Richtung in Zusammenhang steht und einen ausgewählten Menüpunkt in Zusammenhang mit der Richtung aktiviert,
wobei die Schnittstelle konfiguriert ist, sodass Aktivierung des ausgewählten Menüpunktes ein aktuelles Menü zu einem Untermenü bewegt oder bewirkt, dass die zumindest eine Steuerung einen Befehl an das Peripheriegerät überträgt, um die Umwelt der zumindest einen Region der Struktur in Zusammenhang mit dem Peripheriegerät zu modifizieren,
wobei das System ferner zumindest ein Benutzerpositionserfassungsgerät beinhaltet, das Informationen in Bezug auf den Standort des Benutzereingabegeräts innerhalb einer Struktur oder die Ausrichtung des Benutzereingabegeräts relativ zu der Struktur bereitstellt, und
wobei die Schnittstelle konfiguriert ist, um ungültige Befehle, die in Bezug auf den aktuellen Standort oder die aktuelle Ausrichtung des Benutzereingabegeräts basierend auf den Informationen, die durch das zumindest eine Benutzerpositionserfassungsgerät bereitgestellt werden, nicht ausgegeben werden können, zu entfernen.

2. Umweltverwaltungssystem nach Anspruch 1, wobei die Struktur einen Gebäudeeinschluss bildet, der einen Innenraum definiert und das Peripheriegerät eine Beleuchtungskomponente, eine Klimatisierungskomponente ist, durch ein sicherheitsbasiertes Gerät gebildet wird oder aus einer Haushaltsanwendung gebildet wird.

3. Umweltverwaltungssystem nach einem vorhergehenden Anspruch, das zumindest ein verdrahtetes oder physisches Netzwerk beinhaltet.

4. Umweltverwaltungssystem nach einem vorhergehenden Anspruch, das zumindest ein drahtloses Netzwerk beinhaltet.

5. Umweltverwaltungssystem nach einem vorhergehenden Anspruch, das eines oder mehrere von KNX-kompatiblen Peripheriegeräten, KNX-kompatiblen Netzwerken oder KNX-kompatiblen Steuerungen einschließt.

6. Umweltverwaltungssystem nach einem vorhergehenden Anspruch, wobei ein weiterer Benutzerbefehl einen passiven kognitiven Befehl bereitstellt, der eine Angabe des aktuellen emotionalen Zustands des Benutzers nennt.

7. Umweltverwaltungssystem nach Anspruch 6, wobei ein passiver Benutzerbefehl verwendet wird, um ein Skript mit spezifischen Umweltbedingungen abzurufen.

8. Umweltverwaltungssystem nach einem vorhergehenden Anspruch, wobei ein Benutzereingabesystem eines oder mehrere von einem Headset zur Erfassung von neuralen Signalen oder einer Komponente zur Erfassung von biometrischen Daten einschließt.

9. Umweltverwaltungssystem nach einem der Ansprüche 1 bis 8, wobei ein Benutzer nach der Ausgabe eines anfänglichen Benutzerbefehls einen zweiten Bestätigungsbenutzerbefehl ausgeben muss.

10. Umweltverwaltungssystem nach einem der Ansprüche 1 bis 9, ferner umfassend zumindest einen Befehlsempfangsindikator, der aus einem Audiosignalgenerator oder einer lichtemittierenden visuellen Komponente eingesetzt innerhalb der Struktur gebildet ist.

11. Umweltverwaltungssystem nach Anspruch 10, wobei ein Befehlsempfangsindikator in jeder Teilregion einer Struktur bereitgestellt ist, die ein Benutzer besetzen kann und in der er Befehle ausgeben kann.

12. Verfahren zur Verwaltung der Umwelt von zumindest einer Region einer Struktur, die folgenden Schritte umfassend:
(i) Bereitstellen eines Benutzerbefehls von einem Benutzerschnittstellensystem an eine Steuerung, wobei der Benutzerbefehl unter Verwendung von zumindest einem neuralen Benutzersignal formuliert wird;
(ii) Übertragen von zumindest einem Befehl von der Steuerung an zumindest ein Peripheriegerät, das sich innerhalb der Struktur befindet, um den Betrieb des zumindest einen Peripheriegeräts zu steuern;
(iii) Betreiben des zumindest einen Peripheriegeräts, das mit einem Befehl beliefert wurde, um die Umwelt der Region in Zusammenhang mit jedem der Peripheriegeräte basierend auf dem ursprünglichen Benutzerbefehl, der durch das Benutzereingabesystem bereitgestellt wird, zu verwalten,
**dadurch gekennzeichnet, dass**:
der Benutzerbefehl über ein hierarchisches Befehlsmenüsystem bereitgestellt wird, das einem Benutzer eine Auswahl aus einem Maximum von vier Optionen bereitstellt, um einen Menüpunkt in Zusammenhang mit einer Richtung zu einer beliebigen Zeit auszuwählen, wobei die Auswahl durch das neurale Signal erfolgt, das einen aktiven kognitiven Befehl darstellt,
wobei der aktive kognitive Befehl mit einer Richtung in Zusammenhang steht und den ausgewählten Menüpunkt in Zusammenhang mit der Richtung aktiviert,
wobei die Schnittstelle konfiguriert ist, sodass Aktivierung des ausgewählten Menüpunktes ein aktuelles Menü zu einem Untermenü bewegt oder bewirkt, dass die zumindest eine Steuerung den zumindest einen Befehl an das zumindest eine Peripheriegerät überträgt, um die Umwelt der zumindest einen Region der Struktur in Zusammenhang mit dem zumindest einen Peripheriegerät zu modifizieren,
wobei das Verfahren ferner vor dem Bereitstellen eines Benutzerbefehls von einem Benutzerschnittstellensystem an eine Steuerung die folgenden Schritte beinhaltet:
Bereitstellen von Informationen in Bezug auf den Standort eines Benutzereingabegeräts innerhalb einer Struktur oder die Ausrichtung des Benutzereingabegeräts relativ zu der Struktur von zumindest einem Benutzerpositionserfassungsgerät, und
Entfernen von ungültigen Befehlen, die in Bezug auf den aktuellen Standort oder die aktuelle Ausrichtung des Benutzereingabegeräts basierend auf den Informationen, die durch das zumindest eine Benutzerpositionserfassungsgerät bereitgestellt werden, nicht ausgegeben werden können.

## Revendications

1. Système de gestion d'environnement pour une structure qui comporte :
une pluralité de dispositifs périphériques répartis au sein de la structure dans lequel un fonctionnement d'un dispositif périphérique modifie l'environnement d'au moins une région de la structure associée au dispositif périphérique ;
au moins un réseau qui connecte ladite pluralité de dispositifs périphériques ;
au moins un dispositif de commande agencé pour recevoir des signaux en provenance d'un ou de plusieurs dispositifs périphériques et pour transmettre un ordre à un ou plusieurs dispositifs périphériques à l'aide dudit au moins un réseau ;
**caractérisé en ce que** le système comporte en outre :
un système d'entrée utilisateur interfacé avec ledit au moins un dispositif de commande, le système d'entrée utilisateur étant agencé pour utiliser au moins un signal neuronal d'utilisateur pour fournir un ordre d'utilisateur auxdits un ou plusieurs dispositifs de commande,
dans lequel une interface fonctionnant entre le système d'entrée utilisateur et l'au moins un dispositif de commande implémente un système de menu d'ordres hiérarchique fournissant à l'utilisateur un choix d'un maximum de quatre options pour sélectionner un élément de menu associé à une direction à tout instant, la sélection faite par ledit signal neuronal représentant un ordre cognitif actif,
dans lequel l'ordre cognitif actif est associé à une direction et active un élément de menu sélectionné associé à la direction,
dans lequel l'interface est conçue de sorte que l'activation de l'élément de menu sélectionné déplace un menu actuel vers un sous-menu ou amène l'au moins un dispositif de commande à transmettre un ordre au dispositif périphérique pour modifier l'environnement de ladite au moins une région de la structure associée au dispositif périphérique,
dans lequel le système comporte en outre au moins un dispositif de détection de position d'utilisateur qui fournit des informations concernant l'emplacement du dispositif d'entrée utilisateur au sein d'une structure ou l'orientation du dispositif d'entrée utilisateur par rapport à la structure, et
dans lequel l'interface est conçue pour éliminer des ordres invalides qui ne peuvent pas être émis en lien avec l'emplacement ou l'orientation actuel du dispositif d'entrée utilisateur d'après les informations fournies par l'au moins un dispositif de détection de position d'utilisateur,

2. Système de gestion d'environnement selon la revendication 1, dans lequel la structure forme une enceinte de bâtiment qui définit un espace intérieur et le dispositif périphérique est un composant d'éclairage, un composant de climatisation, est formé par un dispositif de sécurité ou est formé d'un appareil ménager.

3. Système de gestion d'environnement selon une quelconque revendication précédente, qui comporte au moins un réseau filaire ou physique.

4. Système de gestion d'environnement selon une quelconque revendication précédente, qui comporte au moins un réseau sans fil.

5. Système de gestion d'environnement selon une quelconque revendication précédente, qui incorpore un ou plusieurs parmi des périphériques compatibles KNX, des réseaux compatibles KNX ou des dispositifs de commande compatibles KNX.

6. Système de gestion d'environnement selon une quelconque revendication précédente, dans lequel un autre ordre d'utilisateur fournit un ordre cognitif passif qui donne une indication de l'état émotionnel actuel de l'utilisateur.

7. Système de gestion d'environnement selon la revendication 6, dans lequel un ordre d'utilisateur passif est utilisé pour récupérer un script de conditions environnementales spécifiques.

8. Système de gestion d'environnement selon une quelconque revendication précédente, dans lequel un système d'entrée utilisateur incorpore un ou plusieurs parmi un casque de détection de signal neuronal ou un composant détecteur de données biométriques.

9. Système de gestion d'environnement selon l'une quelconque des revendications 1 à 8, dans lequel il est demandé à l'utilisateur d'émettre un second ordre d'utilisateur de confirmation après l'émission d'un ordre d'utilisateur initial.

10. Système de gestion d'environnement selon l'une quelconque des revendications 1 à 9, comprenant en outre au moins un indicateur de réception d'ordre, formé d'un générateur de signal audio ou d'un composant visuel d'émission de lumière, déployé au sein de la structure.

11. Système de gestion d'environnement selon la revendication 10, dans lequel un indicateur de réception d'ordre est fourni dans chaque sous-région d'une structure qu'un utilisateur peut occuper et au sein de laquelle il peut émettre des ordres.

12. Procédé de gestion de l'environnement d'au moins une région d'une structure comprenant les étapes de :
(i) fourniture d'un ordre d'utilisateur depuis un système d'interface utilisateur à un dispositif de commande, ledit ordre d'utilisateur étant formulé à l'aide d'au moins un signal neuronal d'utilisateur ;
(ii) transmission d'au moins un ordre depuis le dispositif de commande à au moins un dispositif périphérique situé au sein de la structure pour commander le fonctionnement dudit au moins un dispositif périphérique ;
(iii) fonctionnement dudit au moins un dispositif périphérique auquel est fourni un ordre pour gérer l'environnement de la région associée à chacun desdits dispositifs périphériques d'après l'ordre d'utilisateur d'origine fourni par le système d'entrée utilisateur,
**caractérisé en ce que** :
l'ordre d'utilisateur est fourni par un système de menu d'ordres hiérarchique fournissant à un utilisateur un choix d'un maximum de quatre options pour sélectionner un élément de menu associé à une direction à tout instant, la sélection faite par ledit signal neuronal représentant un ordre cognitif actif,
dans lequel l'ordre cognitif actif est associé à une direction et active l'élément de menu sélectionné associé à la direction,
dans lequel l'interface est conçue de sorte que l'activation de l'élément de menu sélectionné déplace un menu actuel vers un sous-menu ou amène l'au moins un dispositif de commande à transmettre ledit au moins un ordre audit au moins un dispositif périphérique pour modifier l'environnement de ladite au moins une région de la structure associée audit au moins un dispositif périphérique,
dans lequel le procédé comporte en outre les étapes, avant la fourniture d'un ordre d'utilisateur depuis un système d'interface utilisateur à un dispositif de commande, de :
fourniture d'informations concernant l'emplacement d'un dispositif d'entrée utilisateur au sein d'une structure ou l'orientation du dispositif d'entrée d'utilisateur par rapport à la structure à partir d'au moins un dispositif de détection de position d'utilisateur, et
élimination d'ordres invalides qui ne peuvent pas être émis en lien avec l'emplacement ou l'orientation actuel du dispositif d'entrée utilisateur d'après les informations fournies par l'au moins un dispositif de détection de position d'utilisateur.
